# EUROPÄISCHE PATENTSCHRIFT

(11) **EP 1 796 943 B1**
(45) Veröffentlichungstag und Bekanntmachung des Hinweises auf die Patenterteilung: **06.02.2008**
(21) Anmeldenummer: 05783833.6
(22) Anmeldetag: 20.09.2005
(51) Int. Cl.: B60R 22/34

(54) **VORRICHTUNG UND VERFAHREN ZUR STRAFFUNG EINES ZUM INSASSENSCHUTZ IN EINEM FAHRZEUG DIENENDEN SICHERHEITSGURTES**
DEVICE AND METHOD FOR TIGHTENING A SAFETY BELT SERVING TO PROTECT OCCUPANTS IN A VEHICLE
DISPOSITIF ET PROCEDE DE PRETENSION D'UNE CEINTURE DE SECURITE DESTINEE A LA PROTECTION D'UN PASSAGER D'UN VEHICULE AUTOMOBILE

(30) Priorität: 05.10.2004 DE 102004048455
(43) Veröffentlichungstag der Anmeldung: 20.06.2007
(73) Patentinhaber: Fraunhofer-Gesellschaft zur Förderung der angewandten Forschung e.V., 80686 München (DE)
(72) Erfinder: BEIN, Thilo, 64289 Darmstadt (DE); FISCHER, Guido, 56112 Lahnstein (DE); HANSELKA, Holger, 64297 Darmstadt (DE)
(74) Vertreter: Rösler, Uwe
(86) Internationale Anmeldenummer: PCT/EP2005/010167
(87) Internationale Veröffentlichungsnummer: WO 2006/037464

(56) Entgegenhaltungen:
- EP-A- 0 856 443
- DE-A1- 1 940 866
- DE-C1- 19 604 483
- GB-A- 1 274 011
- GB-A- 2 386 350

## Beschreibung

### Technisches Gebiet

Die Erfindung bezieht sich auf eine Gurtbremse für einen zum Insassenschutz in einem Fahrzeug dienenden Sicherheitsgurt, der auf eine bzw. von einer um eine Gurtwelle drehbar gelagerte Gurttrommel auf- und abwickelbar ist. Ferner wird ein Verfahren zum Arretieren eines für einen zum Insassenschutz in einem Fahrzeug dienenden Sicherheitsgurtes beschrieben.

### Stand der Technik

Moderne Sicherheitsgurtsysteme setzen sich in aller Regel aus mehreren mechanisch passiv arbeitenden Systemen zusammen, die gewährleisten sollen, dass die Fahrzeuginsassen während eines Unfalls möglichst geringen Belastungen ausgesetzt werden und dabei auch möglichst keinen Kontakt zu dem Fahrzeuginnenraum haben; auch nicht mit jenen Teilen, die durch den Aufprall in die Fahrgastzelle eindringen können. Nahezu alle bisher bekannten Vorrichtungen zum Abbremsen bzw. Arretieren von Sicherheitsgurten sehen passiv wirkende Verschlussvorrichtungen vor, die unabhängig von der Unfallsituation sowie den vor Verletzungen zu bewahrenden Fahrzeuginsassen insbesondere unabhängig von deren Gewicht und Größe ruckartig aktivierbar sind. Adaptive Systeme, die unfallsowie passagierabhängig eine Abbremsung des Sicherheitsgurtes gewährleisten sind nicht oder nur mit einem konstruktiv großem Aufwand realisierbar.

Neben den zur bloßen Gurtabbremsung an sich bekannten Vorrichtungen, die insbesondere im Kollisionsfall ein weiteres Abwickeln des Gurtes von der Gurttrommel verhindern sollen, sind intelligente Gurtstraffersysteme bekannt, die in auf Sensoren gestützte ganzheitliche Fahrzeugsysteme mit integriert sind und auf diesbezüglich sensoriell erfasste Daten situationsabhängig ansteuerbar sind. So werden bspw. die Zündzeitpunkte von Airbags sowie auch die Auslösungen von Gurtstraffersystemen von diesen Daten mit beeinflusst. Reversibel arbeitende Gurtstraffer zwingen die Fahrzeuginsassen in eine optimale Sitzposition, in der die während der Kollision auf die Fahrzeuginsassen einwirkenden Kraftmomente in einem weitgehend physiologisch erträglichen Rahmen gehalten werden sollen. Derartige bekannte, reversibel arbeitende Gurtstraffer nutzen elektromotorische Antriebe um den Gurt in einer vorbestimmten Weise zu straffen. Ein derartiger Gurtstraffer ist beispielsweise der DE 199 27 731 C2 zu entnehmen. Durch entsprechende Auswertung der von sogenannten Precrash-Sensoren im Fahrzeug herrührenden Daten können bereits im Verdachtsfall bezüglich einer unmittelbar bevorstehenden Kollision geeignete die Gurtstraffer aktivierenden Signale abgesetzt werden. Auf diese Weise kann die Strecke, die die Fahrzeuginsassen kurz vor einer Kollision nach vorne rutschen von bis zu 150 mm auf 50mm reduziert werden, was einem durchaus beachtlichem Sicherpotential entspricht. Auch bei mehrfachen Überschlägen oder mehrmaligen Einschlägen kann ein wiederholtes Straffen der Sicherheitsgurte vorteilhaft sein. Das in der vorstehend genannten Patentschrift beschriebene Gurtstraffersystem besteht jedoch aus einer Vielzahl einzelner Komponenten, deren Anfälligkeit die Zuverlässigkeit des Gesamtsystems prägen. So wird das durch den Elektromotor erzeugte Beschleunigungs- und Bremsmoment über ein Planetenradgetriebe auf die Gurtwelle übertragen, auf die der Gurt auf- bzw. von die der Gurt abgewickelt wird.

Die GB 2 386 350 A beschreibt einen Sicherheitsgurt-Kraftbegrenzer, der gemäß Ausführungsbeispiel in Figur 2 längs der Gurtwelle Bremsscheiben vorsieht, die im Falle eines Blockierens der Gurttrommel durch eine Stapel-Piezo-Aktoranordnung axialwärts gegeneinander verpresst werden. In dieser bekannten Anordnung verbleiben die Bremsscheiben unabhängig vom Aufwickelzustand der Gurttrommel mit einem axial konstanten Abstand, so dass die Bremsansprechzeit unverändert groß ist.

Aus der DE 19 40 866 geht eine Wickelvorrichtung für Sicherheitsgurte hervor, bei der in Abhängigkeit des Auf- bzw. Abwickelzustandes des Sicherheitsgurtes an der Gurttrommel vorgesehene Bremsscheiben in Reibkontakt mit entsprechenden Stellringen bzw. den Stirnseiten der Gurttrommel treten.

### Darstellung der Erfindung

Der Erfindung liegt die Aufgabe zugrunde, eine Gurtbremse für einen zum Insassenschutz in einem Fahrzeug dienenden Sicherheitsgurt, der auf eine bzw. von einer um eine Gurtwelle drehbar gelagerte Gurttrommel auf- und abwickelbar ist, derart auszubilden, dass bei einer möglichst geringen Anzahl von Einzelkomponenten, die jeweils über ein geringes Ausfallpotential verfügen sollen, eine kontrollierte Abrollbewegung des Sichergurtes in Abhängigkeit der Crashsituation sowie der zu schützenden Fahrzeuginsassen möglich sein soll. Das mit Hilfe der lösungsgemäßen Gurtbremse geregelte Abrollen des Sicherheitsgurtes soll dazu beitragen, die Insassenverzögerung auf das Unfallgeschehen abzustimmen.

Die Lösung der der Erfindung zugrunde liegenden Aufgabe ist im Anspruch 1 angegeben. Gegenstand des Anspruches 16 ist ein Verfahren zum Arretieren eines für einen Insassenschutz in einem Fahrzeug dienenden Sicherheitsgurtes. Den Erfindungsgedanken vorteilhaft weiterbildende Merkmale sind Gegenstand der Unteransprüche und insbesondere aus der Beschreibung unter Bezugnahme auf die Beschreibung der Ausführungsbeispiele zu entnehmen.

Die Erfindung geht von dem Kerngedanken aus, die Rotation der Gurttrommel, auf die der Sicherheitsgurt auf- sowie abwickelbar ist, im Crashfall über eine mit der Gurttrommel axial verbundene Gurtwelle zu verzögern bzw. vollständig abzubremsen, wobei zur Verzögerung bzw. Abbremsung der sich während des Abwickelns des Sicherheitsgurtes von der Gurttrommel längs der rotierenden Gurtwelle ein der Scheiben- oder Lamellenbremse ähnliches Prinzip zum Einsatz kommt, das durch Reibschluss für das Abbremsen der Gurttrommel erforderliche Bremskräfte aufbringt. Durch Vorsehen vorzugsweise einer Vielzahl einzelner Bremsmittel längs der Gurtwelle, die vorzugsweise in Form von Scheiben- oder Lamellenbremsen ausgebildet sind, ergeben sich Reibpaarungen zwischen denen durch kontrollierte Erzeugung axial wirkender Normalkräften ein auf die Gurtwelle wirkendes abbremsendes Moment hervorgerufen werden kann.

Zur Erzeugung von zwischen den längs der Gurtwelle angeordneten-Bremsmitteln wirkenden Bremskräften bedarf es wenigstens eines Aktorelementes, das über eine kurze Ansprechzeit verfügt und seine Aktorkräfte unmittelbar auf die Bremsmittel zu übertragen vermag. Dies setzt voraus, dass das Aktorelement in räumlich unmittelbarer Nähe zu den längs der Gurtwelle angeordneten Bremsmitteln positioniert ist, wobei die gegenseitigen Abstände zwischen den Reibungspaaren ebenso so gering wie nur möglich zu wählen sind, um möglichst keine bzw. nur geringe Reaktionswege in Kauf nehmen zu müssen. Auf der anderen Seite soll aus Gründen einer praktikablen Nutzung des Sicherheitsgurtes während des Anlegens sowie auch zur Gewährleistung einer weitgehend uneingeschränkten Bewegungsmöglichkeit des Fahrzeuginsassen bei angelegtem Sicherheitsgurt ein weitgehend widerstandsfreies Abrollen des Sicherheitsgurtes von der Gurttrommel möglich sein, d.h. das wenigstens eine Aktorelement darf im nicht betätigten Zustand, also im Normalfall, der sich vom Crashfall unterscheidet, keinerlei Bremswirkung auf die längs der Gurtwelle angeordneten Bremsmittel ausüben.

Die lösungsgemäße Gurtbremse gemäß den Merkmalen des Oberbegriffes des Anspruches 1 ist derart ausgebildet, dass wenigstens ein längs zur Gurtwelle verschiebbar gelagertes und mit der Gurtwelle drehfest verbundenes Bremsmittel vorgesehen ist, das zwischen einem ersten und einem zweiten Gegenlager angeordnet ist. Ein wenigstens mit dem ersten Gegenlager in Wirkverbindung stehendes Mittel sorgt dafür, dass in Abhängigkeit vom Auf- oder Abwickeln des Sicherheitsgurtes auf oder von der Gurttrommel das erste Gegenlager längs der Gurtwelle derart zwangsgeführt wird, dass das erste Gegenlager aus einer ersten Stellung, in der der Sicherheitsgurt auf der Gurttrommel aufgewickelt und ein axialer Abstand a₁ zwischen dem Bremsmittel und wenigstens einem Gegenlager besteht, in eine zweite Stellung überführbar ist, in der der Sicherheitsgurt zumindest teilweise von der Gurttrommel abgewickelt ist und ein axialer Abstand a₂ zwischen dem Bremsmittel und wenigstens einem Gegenlager besteht, wobei der Abstand a₂ kleiner ist als der Abstand a₁. In beiden Stellungen befinden sich die von beiden Gegenlagern begrenzten Bremsmittel nicht im gegenseitigem Reibkontakt, so dass in beiden Stellungen ein weitgehend freiläufiges Auf- bzw. Abwickeln des Gurtes auf bzw. von der Gurttrommel möglich ist. Ferner ist wenigstens ein Aktorelement vorgesehen, das bei Betätigung in der zweiten Stellung eine längs zur Gurtwelle zwischen dem ersten und zweiten Gegenlager wirkende und auf das wenigstens eine Bremsmittel gerichtete Bremskraft erzeugt.

Durch die erfindungsgemäße Reduzierung des axialen Abstandes längs der Gurtwelle zwischen dem wenigstens einen Bremsmittel sowie den beiden axial gegenüberliegenden Gegenlagern wird eine Situation geschaffen, in der das Aktorelement bei Betätigung eine nur geringfügige axiale Aktorbewegung auszuführen hat, die ursächlich für die auf das wenigstens eine Bremsmittel gerichtete Bremskraft ist. Durch die aufgrund der nur geringfügig voneinander beabstandeten Gegenlager sowie dem dazwischen befindlichen wenigstens einem Bremsmittel können die für die Applikation der Bremskraft erforderlichen Bremswege auf ein Minimum reduziert werden, wodurch die Ansprechzeit des Bremsmechanismuses entscheidend reduziert ist.

Grundsätzlich eignen sich als Aktorelemente all jene Elemente, die im Wege einer Translationsbewegung oder Formänderung die vorstehend beschriebenen axialen Bremskräfte aufzubringen in der Lage sind. So stehen hierfür ebenso elektromotorische Antriebe zur Wahl, die über einen Hubmechanismus axial auf die Gegenlager wirkende Kräfte in reversibel abrufbarer Weise zu erzeugen vermögen. Von besonderem Interesse ist jedoch der Einsatz sogenannter Wandlerwerkstoffe, die durch Applikation von Energie eine spontane Formveränderung erfahren, die zur axialen Bremskrafterzeugung gezielt nutzbar ist. Generell eignen sich jegliche Arten von Wandlerwerkstoffe, so beispielsweise Piezo-Keramiken, Piezo-Polymere, elektrostriktive Keramiken, elektroreologische Fluide, Polymergele, magnetoreologische Fluide, Formgedächtnislegierungen oder Formgedächtnispolymere. Besonders geeignet sind aus den vorstehend genannten Wandleniverkstoffklassen all jene Werkstoffe, die über eine feste Phase verfügen und mittels Zufuhr elektrischer Energie aktivierbar sind. Gleichsam eignen sich auch fluidische Wandlerwerkstoffe, die jedoch in geeigneten Kapselungen einzubringen sind, um sie als Aktorelemente einsetzen zu können.

In einem bevorzugten Ausführungsbeispiel der lösungsgemäßen Gurtbremse finden aus piezokeramischen Werkstoffen bestehende Stapelaktoren Verwendung, die bei Anlegen einer elektrischen Spannung eine zur elektrischen Spannung proportionale Längenänderung erfahren, die in Gegenwart eines äußeren mechanischen Zwangs entsprechend proportionale Druckkräfte generiert, die im lösungsgemäßen Sinne zur Bereitstellung der Bremskräfte eingesetzt werden. Zwar sind die im Wege der Längenausdehnung von Piezo-Stapelaktoren erzeugbaren Kräfte im Verhältnis zur investierten elektrischen Energie sehr hoch, doch vermögen sich derartige Werkstoffe nur über sehr kurze Strecken auszudehnen. Diese, den Wandlerwerkstoffen zugrunde liegenden Eigenschaften gilt es beim Einsatz als Aktorelemente im Rahmen der Gurtbremse zu berücksichtigen, da jegliche Wegstrecke längs der sich der Wandlerwerkstoff auszudehnen vermag, als Verlust von Kraftpotential aufzufassen ist, sofern sich der Wandlerwerkstoff ohne äußeren mechanischen Zwang ausbreiten kann. Somit gilt es jegliche zwischen dem Wandlerelement und den Gegenlagern vorhandene Toleranzen, Montage- und Funktionsspiele auf ein Minimum zu reduzieren, um bei Längenausdehnung des Aktorelementes eine sofortige Kraftwirkung zwischen den Gegenlagern und den dazwischen befindlichen Bremsmitteln zu erhalten.

Da die Bedienfreundlichkeit des Sicherheitsgurtes unbeeinflusst von der lösungsgemäße Gurtbremse sein soll, d.h. der Abwickel- und Aufrollvorgang des Sicherheitsgurtes von bzw. auf die Gurttrommel soll mit einem ungehinderten Freilauf erfolgen, gilt es zwischen den mit der Gurtwelle in Wirkverbindung stehendem Gegenlager und dem wenigstens einen Bremsmittel jeweils einen mehrere Zehntel Millimeter freien Spalt zu lassen, der jedoch durch die Längenausdehnung der Piezostapelaktoren nicht überwunden werden kann. Aus diesem Grunde sieht die lösungsgemäße Gurtbremse eine Art differentielle Bauweise vor, die es ermöglicht, den für den Freilauf des Sicherheitsgurtes erforderlichen Zwischenspalt durch bloße Betätigung des Sicherheitsgurtes zu überwinden und andererseits die Bremskraftaufbringung ausschließlich im Wege der Aktoransteuerung zu realisieren. Zur Überwindung von jeglichen Montage- und Funktionsspielen sorgt ein mechanisches Mittel, das, wie im weiteren unter Bezugnahme auf die Ausführungsbeispiele noch beschrieben wird, in Form einer Kurvenscheibe oder einer Spindel mit Laufmutter ausgebildet ist und durch eine funktionsbestimmte Rotation der Gurtwelle, die durch das Ab- oder Aufrollen des Sicherheitsgurtes initiiert wird, die Rotationsbewegung in eine translatorische Bewegung axial zur Gurtwelle umzusetzen vermag. Durch die translatorische Bewegung in Axialrichtung zur Gurtwelle wird der Abstand zwischen beiden Gegenlagern reduziert um jegliche Zwischenspalte zwischen den Gegenlagern und dem wenigstens einen Bremsmittel auf ein Minimum zu reduzieren, so dass einerseits zwar eine minimale Freigängigkeit der Bremsmittel relativ zu den Gegenlagern gewährleistet bleibt, jedoch andererseits dafür Sorge getragen wird, dass die zwischen den Bremsmitteln vorgesehenen Reibflächen untereinander sowie mit den entsprechenden Gegenlagern in einen kraftlosen Kontakt geraten. In dieser Stellung, die durch bloße manuelle Betätigung des Sicherheitsgurtes durch Abrollen des Sicherheitsgurtes von der Gurttrommel erreichbar ist, vermag die sich axial zur Gurtwelle orientierte Längenausdehnung der Piezoaktoren unmittelbar eine Bremskraft zwischen den jeweiligen Bremsmitteln und den Gegenlagern hervorrufen. Der durch die Längenausdehnung hervorgerufene Reibschluss zwischen den Bremsmitteln und den Gegenlagern führt zu einem auf die Gurtwelle wirkenden Bremsmoment, dessen Größe letztlich durch die Wahl der elektrischen Spannung, die an den Piezoaktoren angelegt ist, wählbar ist. So bietet die lösungsgemäße Gurtbremse die Möglichkeit einer freiwählbaren Modulation der Bremskräfte, insbesondere kann die Bremskraft wiederholt reduziert und erneut generiert werden, jeweils in Abhängigkeit der Unfallsituation.

Zur Ansteuerung der Piezoaktoren wird vorzugsweise auf Daten von Precrash-Sensoren zurückgegriffen, um bereits vor Wirksamwerden der Crash-Energie entsprechende Bremskräfte zu generieren. Auch ist es möglich, die Abrollbewegung des Sicherheitsgurtes, insbesondere im Crashfall kontrolliert durchzuführen. So kann ein geregeltes Abrollen des Sicherheitsgurtes dazu beitragen, die Insassenverzögerung auf das Unfallgeschehen abzustimmen. Insbesondere bei kleineren Crashgeschwindigkeiten könnten die Fahrzeuginsassen statt der herkömmlichen mechanischen Regelung kontrolliert Raum frei gegeben werden, so dass sich die Verzögerungen reduzieren, was einen positiven Einfluss auf die Verletzungsschwere ausübt. Auch bei hohen Crash-Geschwindigkeiten kann ein kontrollierter Gurtkraft-Zeit-Verlauf dazu beitragen, Beschleunigungsspitzen zu reduzieren und damit den Insassenschutz zu optimieren.

Gleichsam der Überführung der Gurtbremse vom Ausgangszustand, bei dem der Sicherheitsgurt vollständig auf der Gurttrommel aufgewickelt ist und die vorstehend bezeichneten Komponenten der Gurtbremse ein gegenseitiges axiales Spiel aufweisen, in den vorgespannten Zustand, bei dem die Komponenten der Gurtbremse weitgehend spielfrei axial längs der Gurtwelle der Gurtbremse aneinander liegen, kann der erste Zustand durch bloßes Aufwickeln des Sicherheitsgurtes auf die Gurttrommel selbsttätig eingenommen werden. Das Überführen der Gurtbremse in die jeweiligen vorstehend charakterisierten Zustände erfolgt demzufolge durch ausschließliche manuelle Bedienung am Sicherheitsgurt und bedarf somit keiner weiteren Handhabung. Somit ist das lösungsgemäße Bremssystem bedienerfreundlich, zumal es keine andere Handhabung bedarf als bisher im Einsatz befindliche Sicherheitsgurtsysteme.

Obwohl die Anzahl der die lösungsgemäße Gurtbremse realisierenden Komponenten gering und ihre Funktionszuverlässigkeit sehr hoch ist, verfügt die lösungsgemäße Gurtbremse über einen selbsttätig arbeitenden Verriegelungsmechanismus, der für den Fall vorgesehen ist, bei dem eine Ansteuerung der Aktorelemente nicht erfolgt, beispielsweise im Falle mangelnder oder fehlender Energieversorgung zur kontrollierten Betätigung der Aktorelemente. In diesem Fall tritt bei einem weiteren Abwickelvorgang des Sicherheitsgurtes von der Gurttrommel das eingangs beschriebene Mittel zur axialen Verschiebung des ersten Gegenlagers erneut mit diesem derart in Wirkverbindung, dass das erste Gegenlager axialwärts in Richtung des zweiten Gegenlagers bewegt wird und eine zwischen beiden Gegenlagern auf das wenigstens eine Bremsmittel wirkende Bremskraft generiert.

Der lösungsgemäßen Gurtbremse liegt somit ein neuartiges Verfahren zum Arretieren eines Sicherheitsgurtes zugrunde, bei dem die Gurttrommel mittels eines Wandlerwerkstoffes, dem Energie zugeführt und der in Kontakt mit einem auf der Gurttrommel drehfest verbundenen Bremsmittel gebracht wird, arretiert wird. Hierbei wird die Gurttrommel von einem ersten Zustand, bei dem der Sicherheitsgurt auf der Gurttrommel aufgewickelt ist und in dem ein ungebremstes Auf- und Abrollen des Sicherheitsgurtes möglich ist, in einem zweiten Zustand durch zumindest teilweises Abrollen des Sicherheitsgurtes überführt, bei dem der Wandlerwerkstoff nach Energiezufuhr eine sofortige Arretierung der Gurttrommel bewirkt. Hierbei befinden sich in beiden Stellungen die von beiden Gegenlagern begrenzten Bremsmittel nicht im gegenseitigen Reibkontakt, so dass in beiden Stellungen ein weitgehend freiläufiges Auf- und Abwickeln des Gurtes auf bzw. von der Gurttrommel möglich ist.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1a, b: Prinzipskizzen einer Gurttrommel mit Laufmotor und Spindel in einer ersten Stellung (a) sowie zweiten Stellung (b),
- Fig. 2: schematische Explosionsdarstellung einer Gurtbremsenanordnung,
- Fig. 3a, b: Gurtbremsenanordnung ohne Gehäuse (a) sowie mit Gehäuse (b),
- Fig. 4: schematisierte Darstellung einer Gurtbremse mit Kurvenscheibe,
- Fig. 5: Kurvenscheibe

### Wege zur Ausführung der Erfindung, gewerbliche Verwendbarkeit

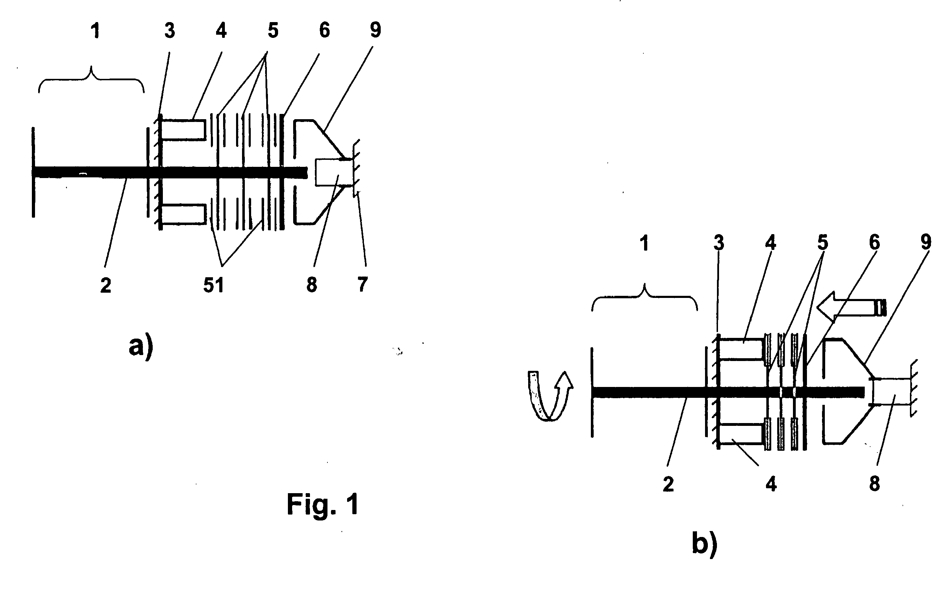

In den Figuren 1a und b ist eine schematisierte Gurtbremse dargestellt, die im Falle der Figur 1a in der ersten Stellung, d.h. sich im Ruhezustand befindet, bei dem der Sicherheitsgurt (nicht dargestellt) weitgehend vollständig auf der Gurttrommel 1 aufgewickelt ist. Die Gurttrommel 1 weist eine Gurtwelle 2 auf, die einseitig die Gurttrommel 1 überragt, längs der folgende, die Gurtbremse 1 umfassende Komponenten angeordnet sind. Unmittelbar benachbart zur Gurttrommel 1 ist ein Gegenlager 3 vorgesehen, dass nicht nur notwendigerweise drehfest, jedoch mit einer festen axialen Position relativ zur Gurtwelle 2 angeordnet ist. Das Gegenlager 3 ist vorzugsweise scheibenförmig ausgebildet und weist an seiner, der Gurttrommel 1 abgewandten Scheibenseite wenigstens zwei vorzugsweise eine Vielzahl gleichmäßig längs der Scheibe verteilte Aktorelemente 4 auf, die in vorteilhafter Weise jeweils als Piezostapelaktoren ausgebildet sind. Längs der Gurtwelle 2 schließen sich Bremsscheiben 5 an, die drehfest und axial verschieblich mit der Gurtwelle 2 in Verbindung stehen. Die als Bremsscheiben 5 ausgebildeten Bremsmittel weisen einander zugewandt ringförmig ausgebildete Bremsbeläge 51 auf, die in axialer gegenseitiger Deckung angebracht sind. Schließlich ist ein weiteres Gegenlager 6 vorgesehen, das zur Gurtwelle 2 axial verschiebbar angebracht ist.

In fester axialer räumlicher Zuordnung zur Gurtwelle 2 ist eine an einem festen Gegenlager 7 angebrachte Spindel 8 mit einem Aussengewinde vorgesehen, über das eine Laufmutter 9 freigängig mit der Spindel 8 verbunden ist. Die Laufmutter 9 gelangt ihrerseits in eine lösbar drehfeste aber axial verschiebliche Verbindung mit der Gurtwelle 2, so dass die Laufmutter 9 bei Rotation der Gurtwelle 2 durch die vorgegebene Steigung des Aussengewindes der Spindel 8 axial zur Gurtwelle 2 verschoben wird. In dem in Figur 1a dargestellten Ruhezustand, bei dem angenommen wird, dass der nicht weiter dargestellte Sicherheitsgurt auf der Gurttrommel 2 zumindest teilweise aufgerollt ist, befindet sich die Laufmutter 9 in einer auf der Spindel 8 axialwärts vollständig zurückgezogenen Position. Nicht aus der Prinzipskizze gemäß Figur 1a ist zu entnehmen, dass die Laufmutter 9 in Wirkverbindung mit dem Gegenlager 6 tritt und dieses ebenso in einer weit vom gegenüberliegenden Gegenlager beabstandeten Position hält. Die zwischen den Gegenlagern 3 und 6 befindlichen Bremsscheiben 5 weisen einen gegenseitigen Abstand im Bereich von mehreren Zehntel Millimetern auf, und gewähren der Gurttrommel 1 einen widerstandsfreien Lauf um die Gurtwelle 2.

Durch Betätigung des Sicherheitsgurtes durch Abrollen von der Gurttrommel 1 bewirkt die Axialverschiebung der Laufmutter 9 eine axialwärts gerichtete Bewegung des Gegenlagers 6 in Richtung des axial fest stehenden Gegenlagers 3, wodurch die gegenseitigen Abstände zwischen den Bremsscheiben 5 reduziert werden. In Figur 1b ist ein sogenannter vorgespannter Zustand dargestellt, in dem die Bremsscheiben 5 weitgehend kraftfrei in einem gegenseitigen axialen Kontakt geraten. In vorteilhafter Weise wird die zwischen der Laufmutter 9 und dem Gegenlager 6 im vorgespannten Zustand bestehende Wirkverbindung gelöst, so dass ein weiteres Abwickeln des Sicherheitsgurtes von der Gurttrommel 1 nicht notwendiger Weise zu einer weiteren Axialbewegung der Laufmutter 9 kommt, um zu gewährleisten, dass ein kontrolliertes nach vorne Beugen des Fahrzeuginsassen, beispielsweise zu Zwecken der Entnahme von Gegenständen aus dem Handschuhfach, ein Blockieren der Gurtbremse verhindert.

In dem in Figur 1b dargestellten vorgespannten Zustand in dem die Gegenlager 3 und 6 eine in Bezug zur Gurtwelle 2 feststehende axiale Position einnehmen und die zwischen ihnen eingeschlossenen Bremsscheiben 5 weitgehend ohne Zwischenspiel einschließen, ist es möglich, dass durch eine gesteuert aktivierbare Längenausdehnung der Aktoren 4 eine sofortige axialgerichtete Bremskraft auf die Bremsscheiben 5 einwirkt, die aufgrund der drehfesten Verbindung der Bremsscheiben 5 mit der Gurtwelle 2 ein auf die Gurttrommel 1 wirkendes Bremsmoment generieren. In diesem Falle ist ein weiteres Abwickeln des Sicherheitsgurtes von der Gurttrommel 1 nicht möglich. Auch kann unter Bezugnahme auf Figur 1b leicht nachvollzogen werden, dass durch eine gesteuerte Längenausdehnung der Aktorelemente 4 die zwischen den Bremsscheiben 5 wirkende Bremskraft in Abhängigkeit von der Crashsituation in geeigneter Weise moduliert werden kann. Insbesondere ist es möglich, die Bremskraft beliebig oft auf- bzw. wieder abzubauen.

Sollten die Aktorelemente 4 aufgrund einer Störung nicht aktivierbar sein, so gilt es eine Wirkverbindung zwischen der Laufmutter 9 und dem Gegenlager 6 herzustellen, so dass durch ein weiteres Abrollen des Sicherheitsgurtes das Gegenlager 6 kontinuierlich gegen das Gegenlager 3 bewegt wird, was zu einer kontinuierlichen Verspannung aller Bremsscheiben 5 führt, wodurch das Bremsmoment ebenso gesteigert werden kann. Die zwischen der Laufmutter 9 und dem Gegenlager 6 erforderliche Wirkverbindung, die wie vorstehend genannt, im vorgespannten Zustand geöffnet sein sollte, gilt es für den Notfall in geeigneter Weise wieder herzustellen. In vorteilhafter Weise eignet sich hierzu eine mechanische Verriegelung zwischen der Gurtwelle 2 und der Laufmutter 9, ähnlich der derzeit verwendeten Verriegelungsmechanismen in herkömmlichen Gurtsystemen. Grundsätzlich sollte die Verbindung zwischen der Laufmutter 9 und der Gurtwelle 2 mechanisch erfolgen, abgesehen von den Aktoren sollten möglichst wenige elektronische Komponenten zum Einsatz kommen, um die Ausfallsicherheit zu erhöhen. Beispielsweise könnte die Notfallverriegelung mit Elektromagneten realisiert werden, die bei Stromausfall dazu führen, dass die Verriegelung zum Eingriff kommt.

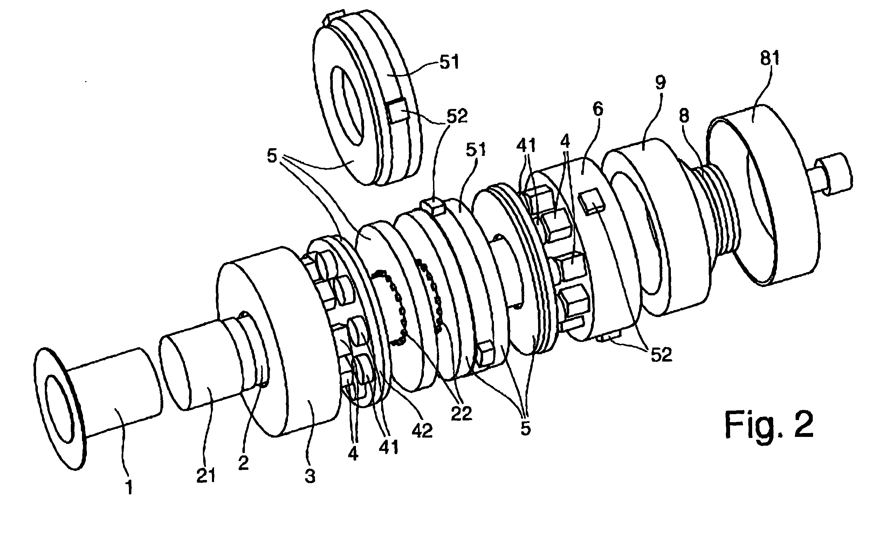

Figur 2 zeigt im Rahmen einer schematischen Explosionsdarstellung alle für die Realisierung einer Gurtbremse erforderlichen Komponenten. So ist die Gurttrommel 1 nicht notwendiger Weise einstückig mit der die Gurttrommel 1 einseitig überragenden Gurtwelle 2 verbunden. Vielmehr ist es möglich die Gurttrommel 1 mit der Gurtwelle 2 drehfest zu verbinden, bspw. über eine Flanschverbdingung in Form eines Gleitlagers 21. Dies ermöglicht es die lösungsgemäße Gurtbremse modular an bereist bestehende Gurttrommeln zu adaptieren.

Mit der Gurtwelle 2 ist das Gegenlager 3 axialfest verbunden, an dessen der Gurttrommel 1 abgewandten Scheibenoberfläche eine Vielzahl einzelner als Piezostapelaktoren ausgebildete Aktorelemente 4 in ringförmiger Anordnung vorgesehen ist. Die Aktorelemente 4 sind axialwärts entsprechenden Gegenlagerflächen 41 zugewandt, die ihrerseits rückseitig an einer Ringscheibe 42 angebracht sind und dafür sorgen, dass die Aktorelemente 4 keinen torsionalen Verspannungen ausgesetzt werden. Des Weiteren sind längs der Gurtwelle Bremsscheiben 5 vorgesehen, die entweder fest mit der Ringscheibe 42 oder mit weiteren Ringelementen 51 verbunden sind oder aber einzeln längs in axialer Richtung an der Gurtwelle 2 angebrachter Nutführungen 22 drehfest jedoch axial verschieblich angebracht sind.

Neben den drehfest mit der Gurtwelle 2 verbundenen Bremsscheiben 5 weisen die weiteren Ringelemente 51 am Umfangsrand angebrachte Steckzapfen 52 auf, die wie im Weiteren noch gezeigt wird, in entsprechende Ausnehmungen eines Gehäuses eingreifen, wodurch sie von der Rotation der Gurtwelle 2 entkoppelt sind.

Ferner ist längs der Gurtwelle 2 das Gegenlager 6 mit ebenfalls entsprechend daran befestigten Aktorelementen 4 vorgesehen, die gleichsam beim Gegenlager 3 ebenso axialwärts entsprechenden Aufnahmestrukturen 41 gegenüberliegend positioniert sind. Schematisiert ist des Weiteren die Laufmutter 9 mit einer in Eingriff bringbaren Spindel 8 dargestellt. Das mit dem Bezugzeichen 81 versehene Bauteil stellt einen Gehäusedeckel dar, der den Laufmutter-Spindel-Mechanismus lagert und gegen Verschmutzung schützt.

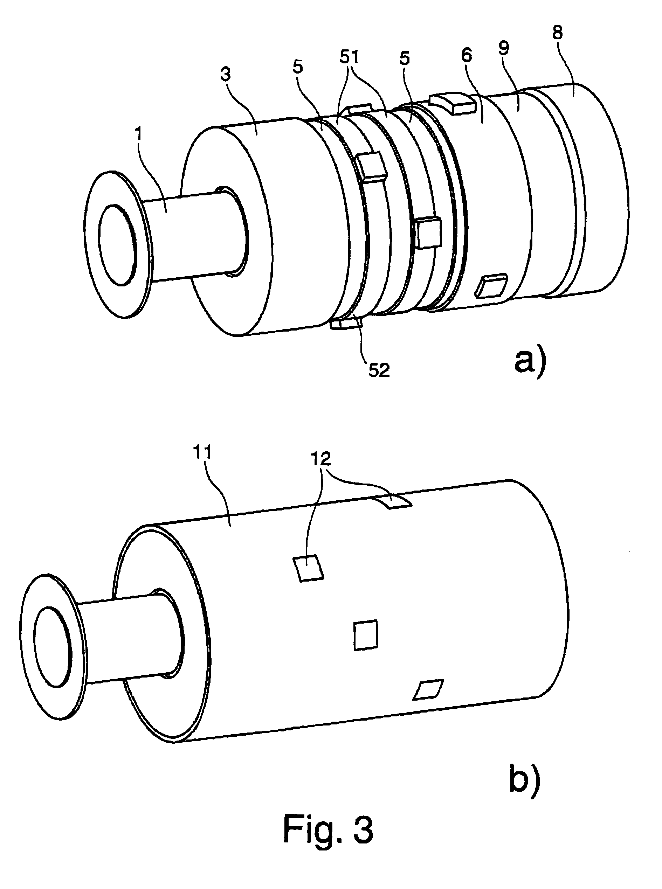

In Figur 3a ist der ineinander gefügte Zustand der in Figur 2 dargestellten Einzelkomponenten gezeigt, mit den bereits eingeführten Bezugsziffern, zu deren Erläuterung auf die vorstehenden Ausführungen verwiesen wird. Die Darstellung gemäß Figur 3a zeigt die äußerst kompakte Bauform der Gurtbremse, die aufgrund der angedeuteten Zwischenspalte zwischen den Bremsscheiben 5 sowie dem Gegenlager 3 bzw. 6 und den Ringscheiben 51 die Gurtbremse im Ruhezustand zeigt. Die längs der Umfangsränder der Ringscheiben 51 sowie des Gegenlagers 6 angebrachten Steckzapfen 52 ragen in entsprechende Ausnehmungen 12 eines Gehäuses 11, das in Figur 3b dargestellt ist. Das Gehäuse 11 ist fest mit dem Gegenlager 3 verbunden sowie über die Steckzapfenverbindung drehfest mit den Komponenten 51 sowie dem Gegenlager 6 verbunden. Aufgrund einer in Axialrichtung größer bemessenen Ausnehmung der Öffnungen 12 innerhalb des Gehäuses 11 vermögen die Steckzapfen 52 eine axialwärts gerichtete Bewegung auszuführen, durch die die Gurtbremse vom Ruhezustand in den vorgespannten Zustand, wie eingangs beschrieben, überführt werden kann.

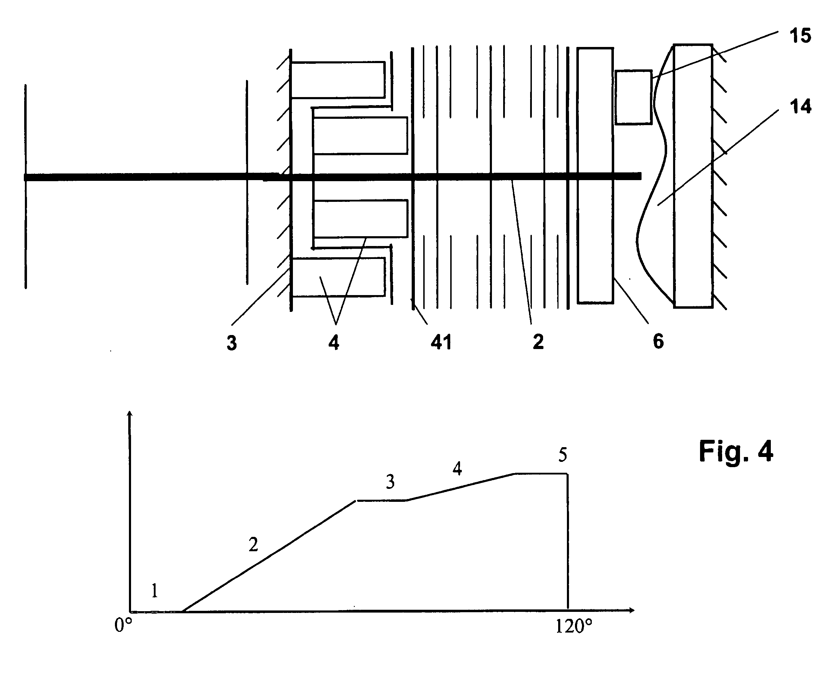

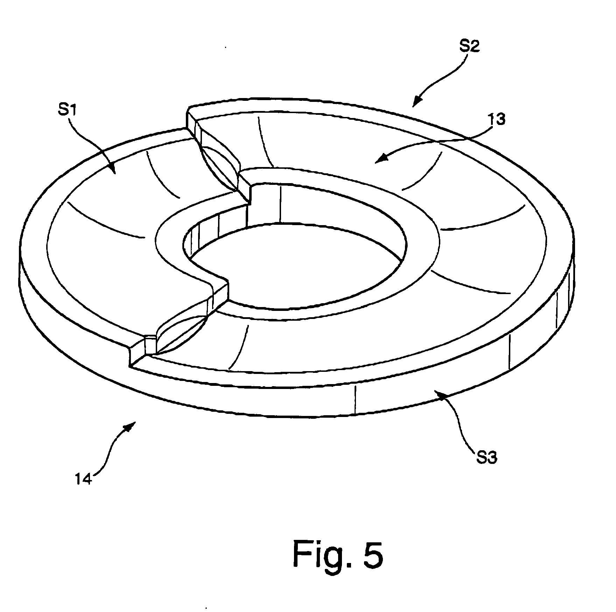

In Figur 4 ist eine schematisierte Darstellung eines weiteren Ausführungsbeispiels einer Gurtbremse dargestellt, deren Mittel zur Initiierung der Längsbewegung des Gegenlagers 6 anstelle einer Laufmutter mit Spindel, wie vorstehend beschrieben, eine sogenannte Kurvenscheibe 14 vorsieht. Die Kurvenscheibe, die als Einzelstück aus Figur 5 entnehmbar ist, besteht aus drei Segmenten S1, S2 und S3, die jeweils ein Bogenmaß von 120° aufweisen. Längs jedes einzelnen Segmentes weist die Kurvenscheibe ein Steigungsprofil gemäß Diagrammdarstellung in Figur 4 auf, längs dem ein Roll- oder Gleitkörper 15 mittel oder unmittelbar mit dem Gegenlager 6 der Gurtbremse in Wirkverbindung tritt. Beispielsweise ist der Rollkörper 15 als Kugel ausgebildet, die längs einer konkaven Profilform 13 abrollt, die jeweils in den drei Segmenten innerhalb der Kurvenscheibe 14 eingearbeitet ist.

In der in Figur 4 dargestellten schematischen Darstellung ist zwischen dem Gegenlager 6 und der Kurvenscheibe 14 ein Gleitelement 15 vorgesehen, das zeitweise mit der Gurtwelle 2 mechanisch drehfest aber axialbeweglich verbindbar ist. Das als Rollkörper ausgebildete Gleitelement 15 steht mit der Kurvenscheibe 14 in Wirkverbindung und wird bei Rotation längs des Profils der Kurvenscheibe 14 zum Abzurollen gezwungen.

Gleichsam dem Ausführungsbeispiel in Figur 1 befinden sich zwischen den Gegenlagern 3 und 6 eine Anordnung von Bremsscheiben 5. Jedoch treten die Aktoren 4 in dem in Figur 4 gezeigten Ausführungsbeispiel lediglich mit dem Gegenlager 3 in Wirkverbindung. Eine bevorzugte Anordnung der Piezostapelaktoren 4 sieht eine fingerartige Verzahnung einzelner Aktoren vor, die in Umfangsrichtung am Gegenlager 3 befestigt sind.
Unter Bezugnahme auf das in Figur 4 dargestellte Diagramm, das das Kurvenscheibenprofil pro Segment wiedergibt, können folgende Zustände der Gurtbremse beschrieben werden. So zeigt das Diagramm längs seiner Abszisse die Bereiche eines Profilsegmentes in Winkelwerten von 0° bis 120°, längs der Ordinate ist die Steigung des Kurvenprofils der Kurvenscheibe aufgetragen.
Bereich 1 stellt die Ruheposition der Gurtbremse dar, wie sie beispielsweise beim Anschnallen eingenommen wird. Die Gurttrommel läuft frei.
Bereich 2 sorgt bei Aktivierung der Einheit für eine Axialbewegung des Gleitelementes 16. Wird die Trommel weit genug gedreht, bewegt sich das Gleitelement 16 in den Bereich 3, dem eigentlichen Funktionsbereich. In diesem Bereich wird idealer Weise ein definiertes Vorspannungsniveau erreicht, jegliche mechanische und fertigungstechnische Spiele sind überwunden und die Aktoren können trotz ihres begrenzten Hubes Kraft aufbringen. Die mechanische Verbindung zwischen der Gurtwelle 2 und dem Gleitelement 16 wird getrennt. Im Falle eines Wegfalls der Spannungsversorgung wird die mechanische Verbindung wieder hergestellt. Das Gleitelement 16 geht in Bereich 4 über und führt zu einer Zwängung des Systems. Je weiter sich der Gurt abrollen will, desto größer wird die Axialbewegung und damit die Bremswirkung. Im Bereich 5 beginnt das nächste Segment. Dabei ist die Möglichkeit des Gleitelementes die Segmente zu wechseln, ein plötzliches Öffnen ist nicht gegeben.

### Bezugszeichenliste

- 1: Gurttrommel
- 2: Gurtwelle
- 21: Gleitlager
- 3: Gegenlager
- 4: Aktorelemente
- 41: Aufnahmestrukturen
- 5: Bremsmittel, Bremsscheiben
- 51: Ringscheibe
- 52: Steckzapfen
- 6: Gegenlager
- 7: festes Gegenlager
- 8: Spindel
- 9: Laufmutter
- 10: N.N.
- 11: Gehäuse
- 12: Öffnungen
- 13: Konkave Profilform
- 14: Kurvenscheibe
- 15: Rollkörper
- 16: Gleitelement

## Patentansprüche

1. Gurtbremse für einen zum Insassenschutz in einem Fahrzeug dienenden Sicherheitsgurt, der auf eine bzw. von einer um eine Gurtwelle (2) drehbar gelagerte Gurttrommel (1) auf- und abwickelbar ist, mit wenigstens einem längs zur Gurtwelle (2) verschiebbar gelagerten und mit der Gurtwelle (2) drehfest verbundenen Bremsmittel (5), das zwischen einem ersten und zweiten Gegenlager (3, 6) angeordnet ist,
**dadurch gekennzeichnet,**
- **dass** ein mit wenigstens dem ersten Gegenlager (6) in Wirkverbindung stehendes Mittel vorgesehen ist, durch das in Abhängigkeit vom Auf- oder Abwickeln des Sicherheitsgurtes auf oder von der Gurttrommel (1) das erste Gegenlager (6) längs der Gurtwelle (2) zwangsgeführt wird, dass das erste Gegenlager (6) aus einer ersten Stellung, in der der Sicherheitsgurt auf der Gurttrommel (1) aufgewickelt ist und ein axialer Abstand a₁ zwischen dem Bremsmittel (5) und wenigstens einem Gegenlager (3, 6) besteht, in eine zweite Stellung überführbar ist, in der der Sicherheitsgurt zumindest teilweise von der Gurttrommel (1) abgewickelt ist und ein axialer Abstand a₂ zwischen dem Bremsmittel (5) und wenigstens einem Gegenlager besteht, mit a₂ kleiner a₁, wobei sich in beiden Stellungen die von beiden Gegenlagern (3, 6) begrenzten Bremsmittel (5) nicht im gegenseitigen Reibkontakt befinden, so dass in beiden Stellungen ein weitgehend freiläufiges Auf- und Abwickeln des Gurtes auf bzw. von der Gurttrommel (1) möglich ist und
- **dass** wenigstens ein Aktorelement (4) vorgesehen ist, das bei Betätigung in der zweiten Stellung eine längs zur Gurtwelle (2) zwischen dem ersten und zweiten Gegenlager wirkende und auf das wenigstens eine Bremsmittel (5) gerichtete Bremskraft erzeugt.

2. Gurtbremse nach Anspruch 1,
**dadurch gekennzeichnet, dass** das Aktorelement (4) einen Wandlerwerkstoff aufweist, der zu einer der folgenden Stoffklassen zuordenbar ist: Piezo-Keramik, Piezo-Polymer, elektrostriktive Keramik, elektrorheologisches Fluid, Polymergel, magnetorheologisches Fluid, Formgedächtnislegierung, Formgedächtnispolymer.

3. Gurtbremse nach Anspruch 1 oder 2,
**dadurch gekennzeichnet**, das das Aktorelement (4) als piezoelektrische Stapelaktor ausgebildet ist.

4. Gurtbremse nach einem der Ansprüche 1 bis 3,
**dadurch gekennzeichnet, dass** das Aktorelement (4) durch Betätigung eine Längenausdehnung um ein Maß erfährt, das größer als a₂ und kleiner als a₁ ist.

5. Gurtbremse nach einem der Ansprüche 1 bis 4,
**dadurch gekennzeichnet, dass** das Bremsmittel (5) eine Bremsscheibe ist, die wenigstens einseitig, vorzugsweise beidseitig je einen Bremsbelag aufweist, oder in Art einer Lamellenbremse ausgebildet ist.

6. Gurtbremse nach einem der Ansprüche 1 bis 5,
**dadurch gekennzeichnet, dass** das Mittel eine Laufmutter (9) mit Spindel (8) ist, dass die Spinde (8) eine Spindelachse aufweist, die in Flucht mit der Gurtwelle (2) axialwärts angeordnet ist, und
dass die Laufmutter (9) drehfest aber axialbeweglich mit der Gurtwell (2) verbunden ist und über ein Gewindespiel mit der Spindel (8) in Eingriff steht.

7. Gurtbremse nach einem der Ansprüche 1 bis 5,
**dadurch gekennzeichnet, dass** das Mittel als Kurvenscheibe (14) ausgebildet ist, die dreh- und axialfest mit der Gurtwelle (2) verbunden ist und über wenigstens einen, vorzugsweise drei oder mehr Rollkörper (15) mit dem ersten Gegenlager (6) in axialer Wirkverbindung steht.

8. Gurtbremse nach Anspruch 7,
**dadurch gekennzeichnet, dass** die Kurvenscheibe (14) an einer axialwärts dem ersten Gegenlager (6) zugewandten Oberfläche eine konkav ausgebildete Laufbahn oder mehrere konkav ausgebildete Laufbahnsegmente aufweist, in denen wenigstens ein Rollkörper (15) geführt ist, der in Kontakt mit einer der Kurvenscheibe (14) zugewandten Oberfläche des ersten Gegenlagers (6) tritt.

9. Gurtbremse nach einem der Ansprüche 1 bis 8,
**dadurch gekennzeichnet, dass** zwischen dem ersten (6) und zweiten Gegenlager (3) eine Vielzahl einzelner Bremsmittel (5) vorgesehen ist, die in der ersten Stellung axial berührungslos zueinander und in der zweiten Stellung sich paarweise weitgehend kraftlos berührend angeordnet sind.

10. Gurtbremse nach einem der Ansprüche 1 bis 9,
**dadurch gekennzeichnet, dass** das zweite Gegenlager (3) axial fest relativ zur Gurtwelle (2) angeordnet ist.

11. Gurtbremse nach einem der Ansprüche 1 bis 10,
**dadurch gekennzeichnet, dass** das erste (6) und zweite Gegenlager (3), das wenigstens eine zwischen beiden Gegenlager (3, 6) angeordnete Bremsmittel (5) sowie das Mittel auf einem Abschnitt der Gurtwelle (2) angeordnet sind, die die Gurttrommel (1) einseitig überragt.

12. Gurtbremse nach einem der Ansprüche 1 bis 11,
**dadurch gekennzeichnet, dass** in der zweiten Stellung das Mittel von dem ersten Gegenlager (6) beabstandet ist und das erste Gegenlager (6) in der zweiten Stellung selbst hemmend verbleibt.

13. Gurtbremse nach Anspruch 12.
**dadurch gekennzeichnet, dass** das Aktorelement (4) mittels Energiezuführung betätigbar ist, und
dass ein Verriegelungsmechanismus vorgesehen ist, der im Falle mangelnder oder fehlender Energieversorgung eine Wirkverbindung zwischen dem Mittel und dem ersten Gegenlagerr (6) herstellt, wobei das Mittel bei einer weiteren Abwicklung des Sicherheitsgurtes von der Gurttrommel (1) das erste Gegenlager (6) axialwärts in Richtung des zweiten Gegenlagers (3) bewegt und eine zwischen beiden Gegenlagern (3, 6) auf das Bremsmittel (5) wirkende Bremskraft generiert.

14. Gurtbremse nach Anspruch 13,
**dadurch gekennzeichnet, dass** der Verriegelungsmechanismus wenigstens eine Tauchspule und/oder einen Elektromagnet aufweist.

15. Gurtbremse nach einem der Ansprüche 1 bis 14,
**dadurch gekennzeichnet, dass** am Fahrzeug angebrachte Precrash-Sensoren vorgesehen sind, durch die das wenigstens eine Aktorelement (4) betätigbar ist.

16. Verfahren zum Arretieren eines für einen zum Insassenschutz in einem Fahrzeug dienenden Sicherheitsgurtes, der auf eine bzw. von einer um eine Gurtwelle (2) drehbar gelagerte Gurttrommel (1) auf- und abgewickelt wird, bei dem die Gurttrommel (1) mittels eines Wandlerwerkstoffes, dem Energie zugeführt und der in Kontakt mit einem auf der Gurttrommel (1) drehfest verbundenen Bremsmittel (5) gebracht wird, arretiert wird,
**dadurch gekennzeichnet, dass** ein erster Zustand, bei dem der Sicherheitsgurt auf die Gurttrommel (1) aufgewickelt ist und in dem ein ungebremstes Auf- und Abrollen des Sicherheitsgurts möglich ist, in einen zweiten Zustand durch zumindest teilweises Abrollen des Sicherheitsgurts überführt wird, bei dem der Wandlerwerkstoff nach Energiezufuhr eine Arretierung der Gurttrommel (1) bewirkt, und dass sich in beiden Stellungen die von beiden Gegenlagern (3, 6) begrenzten Bremsmittel (5) nicht im gegenseitigen Reibkontakt befinden, so dass in beiden Stellungen ein weitgehend freiläufiges Auf- und Abwickeln des Gurtes auf bzw. von der Gurttrommel (1) möglich ist.

17. Verfahren nach Anspruch 16,
**dadurch gekennzeichnet, dass** ein Wandlerwerkstoff eingesetzt wird, der zu einer der folgenden Stoffklassen zuordenbar ist: Piezo-Keramik, Piezo-Polymer, elektrostriktive Keramik, elektrorheologisches Fluid, Polymergel, magnetorheologisches Fluid, Formgedächtnislegierung, Formgedächtnispolymer.

18. Verfahren nach Anspruch 16 oder 17,
**dadurch gekennzeichnet, dass** als Wandlerelement ein piezoelektrischer Stapelaktor eingesetzt wird.

19. Verfahren nach einem der Ansprüche 16 bis 18,
**dadurch gekennzeichnet, dass** der eingesetzte Wandlerverkstoff nach Energiezufuhr eine Längenausdehnung erfährt.

20. Verfahren nach einem der Ansprüche 16 bis 19,
**dadurch gekennzeichnet, dass** die dem Wandlerwerkstoff zugeführte Energie abhängig von Daten, insbesondere von Daten aus Pre-Crash Sensoren gesteuert wird.

21. Verfahren nach einem der Ansprüche 16 bis 20,
**dadurch gekennzeichnet, dass** im zweiten Zustand, im Falle von mangelnder oder fehlender Energieversorgung des Wandlerwerkstoffes, durch weiteres Abrollen des Sicherheitsgurts eine Arretierung der Gurttrommel (1) durch einen Verriegelungsmechanismus erfolgt.

22. Verfahren nach Anspruch 21,
**dadurch gekennzeichnet, dass** durch den Verriegelungsmechanismus eine Arretierung der Gurttrommel (1) nach weniger als einer Umdrehung der Gurttrommel (1) erfolgt.

23. Verfahren nach Anspruch 21 oder 22,
**dadurch gekennzeichnet, dass** der Verriegelungsmechanismus wenigstens eine Tauchspule und/ oder einen Elektromagnet aufweist.

## Claims

1. A belt brake for a safety belt serving to protect occupants in a vehicle, which belt can be wound onto and from a belt drum (1) mounted rotationally about a belt shaft (2), with at least one breaking means (5) displaceably mounted longitudinally to the belt shaft (2) and connected fixedly to the belt shaft (2), which means is arranged between a first and second thrust bearing (3, 6),
**characterised in that**
- a means is provided that is actively connected to at least the first thrust bearing (6) and by means of which the first thrust bearing (6) is forcibly guided along the belt shaft (2) according to whether the safety belt is wound onto or unwound from the belt drum (1), **in that** the first thrust bearing (6) can be transferred from a first position in which the safety belt is wound onto the belt drum (1) and there is an axial distance a₁ between the braking means (5) and at least one thrust bearing (3, 6), into a second position in which the safety belt is partially unwound from the belt drum (1) and there is an axial distance a₂ between the braking means (5) and at least one thrust bearing, with a₂ smaller than a₁, wherein the braking means (5) bounded by both thrust bearings (3, 6) in both positions are not in mutual friction contact, with the result that the belt can be wound onto and unwound from the belt drum (1) in a free-running manner, and
- at least one actuator element (4) is provided which, when actuated in the second position, produces a braking force which acts longitudinally to the belt shaft (2) between the first and second thrust bearings, and which is directed towards the at least one braking means (5).

2. The belt brake according to Claim 1,
**characterised in that** the actuator element (4) has a converter material which can be assigned to one of the following material classes: piezo ceramic, piezo polymer, electrostrictive ceramic, electrorheological fluid, polymer gel, magnetorheological fluid, shape memory alloy and shape memory polymer.

3. The belt brake according to Claim 1 or 2,
**characterised in that** the actuator element (4) is designed as a piezoelectric stack actuator.

4. The belt brake according to Claims 1 to 3,
**characterised in that** the actuator element (4), when actuated, undergoes a longitudinal expansion by a dimension that is greater than a₂ and smaller than a₁.

5. The belt brake according to one of Claims 1 to 4,
**characterised in that** the braking means (5) is a brake disc which as a brake lining at least on one side, preferably on both sides, or is designed in the nature of a multi-disc brake.

6. The belt brake according to one of Claims 1 to 5
**characterised in that** the means is a slide nut (9) with spindle (8), **in that** the spindle (8) has a spindle axis which is arranged flush with the belt shaft (2), and **in**
**that** the slide nut (9) is connected in a rotationally fixed but axially displaceable manner and engages with the spindle (8) by means of a threaded clearance.

7. The belt brake according to one of Claims 1 to 5,
**characterised in that** the means is designed as a cam plate (14) which is connected in a rotationally and axially fixed manner to the belt shaft (2) and is actively and axially connected to the first thrust bearing (6) by at least one, preferably three or more rolling bodies (15).

8. The belt brake according to Claim 7,
**characterised in that** cam plate (14) has a concave designed running path or a plurality of concave shaped running path segments on a surface facing axially towards the first thrust bearing (6), in which segments is guided at least one rolling body (15) which comes into contact with a surface of the first thrust bearing (6) facing towards the cam plate (14).

9. The belt brake according to Claims 1 to 8,
**characterised in that** a multiplicity of individual breaking means (5) is provided between the first (6) and second thrust bearing (3), which means are arranged with no contact between them axially in the first position, and in pairs so that there is largely contact without force between them in the second position.

10. The belt brake according to one of Claims 1 to 9,
**characterised in that** the second thrust bearing (3) is arranged axially in a fixed manner relative to the to the belt shaft (2).

11. The belt brake according to one of Claims 1 to 10,
**characterised in that** the first (6) and second thrust bearing (3), the at least one braking means (5) arranged between the two thrust bearings (3, 6) and the means are arranged on a section of the belt shaft (2) which projects on one side from the belt drum (1).

12. The belt brake according to one of Claims 1 to 11,
**characterised in that** in the second position the means lies at a certain distance from the first thrust bearing (6), and the first thrust bearing (6) remains in the second position in a self-inhibiting manner.

13. The belt brake according to Claim 12,
**characterised in that** the actuator element (4) can be actuated by the supply of energy, and **in that** an interlocking mechanism is provided which, in the event of little or no energy supply, makes an active connection between the means and the first thrust bearing (6), wherein the means moves the first thrust bearing (6) axially in the direction of the second thrust bearing (3) as the safety unwinds further from the belt drum (1), and generates a braking force acting between the two thrust bearings (3, 6) on the braking means (5).

14. The belt brake according to Claim 13,
**characterised in that** the interlocking mechanism has at least one immersed coil and/or one electromagnet.

15. The belt brake according to one of Claims 1 to 14,
**characterised in that** pre-crash sensors are provided enabling the at least one actuator element (4) to be actuated.

16. A method for locking a safety belt serving to protect occupants in a vehicle, which belt is wound onto and unwound from a belt drum (1) mounted rotationally about a belt shaft (2), wherein the belt drum (1) is locked by means of a converter material to which energy is supplied and which is brought into contact with a braking means (5) connected to the belt drum (1) in a rotationally fixed manner,
**characterised in that** a first condition, in which the safety belt is wound onto the belt drum (1) and in which unbraking winding and unwinding of the safety belt is possible, is transferred to a second condition by at least partial unwinding of the safety belt, in which the converter material effects the locking of the belt drum (1) after the energy is supplied, and **in that** in both positions the braking means (5) bounded by the two thrust bearing s(3, 6) are not in mutual friction contact with each other, so that in both positions the belt can be wound onto and unwound from the belt drum (1) in a largely free-running manner.

17. The method according to Claim 16,
**characterised in that** a converter material is used which can be assigned to one of the following material classes: piezo ceramic, piezo polymer, electrostrictive ceramic, electrorheological fluid, polymer gel, magnetorheological fluid, shape memory alloy and shape memory polymer.

18. The method according to Claim 16 or 17,
**characterised in that** a piezoelectric stack actuator is used as the converter element.

19. The method according to Claims 16 to 18,
**characterised in that** the converter material used experiences a longitudinal elongation after the energy is supplied.

20. The method according to one of Claims 16 to 19,
**characterised in that** the energy supplied to the converter material is controlled as a function of data, in particular data from the pre-crash sensors.

21. The method according to one of Claims 16 to 20,
**characterised in that** in the second condition the belt drum (1) is locked by an interlocking mechanism if the energy supply to the converter material is absent or fails.

22. The method according to Claim 21,
**characterised in that** the belt drum (1) is locked by the interlocking mechanism after less than one revolution of the belt drum (1).

23. The method according to Claim 21 or 22,
**characterised in that** the interlocking mechanism has at least one immersed coil and/or one electromagnet.

## Revendications

1. Dispositif d'arrêt de ceinture pour une ceinture de sécurité destinée à protéger un passager dans un véhicule, susceptible de s'enrouler sur et de se dérouler à partir d'un tambour à courroie (1) logé en rotation autour d'un arbre à courroie (2), avec au moins un moyen de freinage (5) logé de façon déplaçable en translation le long de l'arbre à courroie et relié de façon solidaire en rotation avec l'arbre à courroie (2), qui est disposé entre une première et une deuxième butée (3, 6), **caractérisé en ce que**
- il est prévu au moins un moyen en interaction avec au moins la première butée (6), qui en fonction de l'enroulement ou du déroulement de la ceinture de sécurité sur le tambour à courroie (1) ou à partir de ce dernier, assure que la première butée (6) soit soumise à un guidage forcé le long de l'arbre à courroie (2), de sorte que la première butée (6) soit susceptible d'être transférée d'une première position dans laquelle la ceinture de sécurité est enroulée sur le tambour à courroie (1) et un écart a₁ subsiste entre le moyen de freinage (5) et au moins une butée, dans une deuxième position dans laquelle la ceinture de sécurité est au moins partiellement déroulée du tambour à courroie (1) et un deuxième écart a₂ subsiste entre le moyen de freinage (5) et au moins une butée (3, 6), avec a₂ inférieur à a₁, dans les deux positions, les moyens de freinage (5) limités par les deux butées (3, 6) ne se trouvant pas en contact mutuel par friction, pour que dans les deux positions, un enroulement ou un déroulement largement libre de la ceinture soit possible sur le tambour à courroie (1) ou à partir de ce dernier et
- **en ce qu'**il est prévu au moins un élément actionneur (4), qui lors de la manoeuvre dans la deuxième position génère une force de freinage agissant le long de l'arbre à courroie (2), entre la première et la deuxième butée et dirigée sur le au moins un moyen de freinage (5).

2. Dispositif d'arrêt de ceinture selon la revendication 1,
**caractérisé en ce que** l'élément actionneur (4) comporte un matériau transducteur, qui est susceptible d'être affecté à l'une des classes de matières suivantes: piézocéramique, piézopolymère, céramique électrorestrictive, fluide électrorhéologique, gel polymère, fluide magnétorhéologique, alliage à mémoire de forme, polymère à mémoire de forme.

3. Dispositif d'arrêt de ceinture selon la revendication 1 ou 2,
**caractérisé en ce que** l'élément actionneur (4) est conçu sous la forme d'un piézoactionneur à empilement.

4. Dispositif d'arrêt de ceinture selon l'une quelconque des revendications 1 à 3,
**caractérisé en ce que**, par manoeuvre, l'élément actionneur (4) est soumis à un étirement en longueur d'une valeur qui est supérieure à a₂ et inférieure à a₁.

5. Dispositif d'arrêt de ceinture selon l'une quelconque des revendications 1 à 4,
**caractérisé en ce que** le moyen de freinage (5) est un disque de freinage, qui au moins unilatéralement, de préférence bilatéralement comporte chaque fois une garniture de frein, ou est conçu à la manière d'un frein à lamelles.

6. Dispositif d'arrêt de ceinture selon l'une quelconque des revendications 1 à 5,
**caractérisé en ce que** la moyen est un écrou (9) avec broche (8),
**en ce que** la broche (8) comporte un axe de broche qui est disposé en alignement sur l'arbre à courroie (2) en direction axiale et
**en ce que** l'écrou (9) est relié de façon solidaire en rotation, mais déplaçable en direction axiale avec l'arbre à courroie (2) et **en ce qu'**il est en engagement avec la broche (8) par l'intermédiaire d'un filetage à jeu.

7. Dispositif d'arrêt de ceinture selon l'une quelconque des revendications 1 à 5,
**caractérisé en ce que** le moyen est conçu sous la forme d'une came (14) qui est reliée de façon solidaire en rotation et fixe en direction axiale avec l'arbre à courroie (2) et **en ce qu'**il est en interaction axiale par l'intermédiaire d'au moins un, de préférence trois corps de roulement (15) ou plus avec la première butée (6).

8. Dispositif d'arrêt de ceinture selon la revendication 7,
**caractérisé en ce que** sur une surface faisant face à la première butée (6) en direction axiale, la came (14) comporte une voie de roulement conçue sous forme concave ou plusieurs segments de voie de roulement conçus sous forme concave, dans lesquels est guidé au moins un corps de roulement (15), qui entre en contact avec une surface de la première butée (6) faisant face à la came (14).

9. Dispositif d'arrêt de ceinture selon l'une quelconque des revendications 1 à 8,
**caractérisé en ce que**, entre la première (6) et la deuxième butée (3), il est prévu une pluralité de moyens de freinage (5) individuels, qui dans la première position sont sans contact mutuel et qui dans la deuxième position sont disposés en contact par paires, largement sans force.

10. Dispositif d'arrêt de ceinture selon l'une quelconque des revendications 1 à 9,
**caractérisé en ce que** la deuxième butée (3) est disposée de façon fixe en direction axiale par rapport à l'arbre à courroie (2).

11. Dispositif d'arrêt de ceinture selon l'une quelconque des revendications 1 à 10,
**caractérisé en ce que** la première (6) et la deuxième butée (3), le au moins un moyen de freinage (5) disposé entre les deux butées (3, 6), ainsi que le moyen sont disposés sur une section de l'arbre à courroie (2) qui saillit unilatéralement par-dessus le tambour à courroie (1).

12. Dispositif d'arrêt de ceinture selon l'une quelconque des revendications 1 à 11,
**caractérisé en ce que** dans la deuxième position, le moyen est écarté de la première butée (6) et **en ce que** la première butée (6) reste en blocage automatique dans la deuxième position.

13. Dispositif d'arrêt de ceinture selon la revendication 12,
**caractérisé en ce que** l'élément actionneur 4 est susceptible d'être manoeuvré par alimentation d'énergie, et
**en ce qu'**il est prévu un mécanisme de verrouillage, qui dans le cas d'une alimentation d'énergie insuffisante ou absente établit une interaction entre le moyen et la première butée (6), lors d'un déroulement ultérieur de la ceinture de sécurité du tambour à courroie (1), le moyen déplaçant la première butée (6) en direction axiale vers la deuxième butée (3) et générant une force de freinage agissant entre les deux butées (3, 6) sur le moyen de freinage (5).

14. Dispositif d'arrêt de ceinture selon la revendication 13,
**caractérisé en ce que** le mécanisme de verrouillage comporte au moins une bobine mobile et/ou un électroaimant.

15. Dispositif d'arrêt de ceinture selon l'une quelconque des revendications 1 à 14,
**caractérisé en ce qu'**il est prévu des capteurs de pré-crash montés sur le véhicule, qui sont susceptibles de manoeuvrer au moins un élément actionneur (4).

16. Procédé de blocage d'une ceinture de sécurité destinée à protéger un passager dans un véhicule, susceptible de s'enrouler sur et de se dérouler à partir d'un tambour à courroie (1) logé en rotation autour d'un arbre à courroie (2), dans lequel le tambour à courroie (1) est bloqué au moyen d'un matériau transducteur qui est alimenté en énergie et qui est mis en contact avec un moyen de freinage (5) relié de façon solidaire en rotation avec le tambour à courroie (1),
**caractérisé en ce que** par déroulement au moins partiel de la ceinture de sécurité, le tambour à courroie est transféré d'une première position dans laquelle la ceinture de sécurité est enroulée sur le tambour à courroie (1) et dans laquelle un enroulement et un déroulement sans freinage de la ceinture de sécurité est possible, dans une deuxième position, dans laquelle après alimentation d'énergie, le matériau transducteur provoque un blocage immédiat du tambour à courroie (1) et **en ce que** dans les deux positions, les moyens de freinage (5) limités par les deux butées (3, 6) ne sont pas en contact par friction mutuel, pour que dans les deux positions, un enroulement et un déroulement largement libre de la ceinture sur la tambour à courroie (1) ou à partir de ce dernier soit possible.

17. Procédé selon la revendication 16,
**caractérisé en ce qu'**il est utilisé un matériau transducteur, qui est susceptible d'être affecté à l'une des classes de matières suivante: piézocéramique, piézopolymère, céramique électrorestrictive, fluide électrorhéologique, gel polymère, fluide magnétorhéologique, alliage à mémoire de forme, polymère à mémoire de forme.

18. Procédé selon la revendication 16 ou 17,
**caractérisé en ce qu'**en tant qu'élément transducteur, on utilise un piézoactionneur à empilement.

19. Procédé selon l'une quelconque des revendications 16 à 18,
**caractérisé en ce que**, après alimentation en énergie, le matériau transducteur utilisé est soumis à un étirement en longueur.

20. Procédé selon l'une quelconque des revendications 16 à 19,
**caractérisé en ce que** l'énergie alimentée vers le matériau transducteur dépend de données, notamment de données émanant de capteurs de pré-crash.

21. Procédé selon l'une quelconque des revendications 16 à 20,
**caractérisé en ce que** dans la deuxième position, dans le cas d'une alimentation d'énergie insuffisante ou absente du matériau transducteur, par un déroulement ultérieur de la ceinture de sécurité, un blocage du tambour à courroie (1) est assuré par un mécanisme de verrouillage.

22. Procédé selon la revendication 21,
**caractérisé en ce que** le mécanisme de verrouillage assure un blocage du tambour à courroie (1) après moins d'un tour du tambour à courroie (1).

23. Procédé selon la revendication 21 ou 22,
**caractérisé en ce que** le mécanisme de verrouillage comporte au moins une bobine mobile et/ou un électroaimant.
